# EUROPÄISCHE PATENTSCHRIFT

(11) **EP 0 511 480 B1**
(45) Veröffentlichungstag und Bekanntmachung des Hinweises auf die Patenterteilung: **28.06.1995**
(21) Anmeldenummer: 92104244.6
(22) Anmeldetag: 12.03.1992
(51) Int. Cl.: F16H 3/08, B60K 17/28

(54) **Wechselgetriebe mit Lamellenkupplung für einen Zapfwellenantrieb**
Speed-shifting device with multi-plate clutch for a power take-off
Dispositif de changement de vitesses doté d'un embrayage multi-disque pour une prise de force

(30) Priorität: 29.04.1991 DE 4113939
(43) Veröffentlichungstag der Anmeldung: 04.11.1992
(73) Patentinhaber: STEYR-DAIMLER-PUCH AKTIENGESELLSCHAFT, 1010 Wien (AT)
(72) Erfinder: Wöntner, Gebhard, A-4493 Wolfern (AT)

(56) Entgegenhaltungen:
- EP-A- 0 066 381
- DE-A- 2 011 108
- FR-A- 2 393 986
- FR-E- 87 980
- US-A- 4 785 682

## Beschreibung

Die Erfindung handelt von einem Wechselgetriebe für den Antrieb der Zapfwelle eines Ackerschleppers, welches aus einer Eingangswelle mit mindestens zwei treibenden Zahnrädern und einer Ausgangswelle mit mindestens zwei getriebenen Zahnrädern und einer dazwischen liegenden Kupplungsmuffe besteht.

Ein derartiges Wechselgetriebe ist etwa aus der dem Oberbegriff entsprechenden DE-A-3 331 242 bekannt, wobei dann weiters die Antriebswelle über eine dort nicht dargestellte aber dazugehörende Trennkupplung direkt oder indirekt mit dem Motor verbunden ist, um im gewöhnlichen Fahrbetrieb ein Mitlaufen der Getriebezahnräder zu vermeiden.

Diese Trennkupplung erhöht den Raumbedarf in axialer Richtung erheblich, was im Getriebeblock eines Ackerschleppers besonders ungünstig ist. Außerdem erschwert sie in der Fertigung den Einbau des Wechselgetriebes. Wenn diese Kupplung, wie meist der Fall, eine hydraulisch geschaltete Lamellenkupplung ist, muß die Antriebswelle des Getriebes über ihre gesamte Länge von der anderen freien Seite aus mit einer Druckölzufuhrbohrung versehen sein, was fertigungstechnisch ungünstig ist.

Es ist daher Ziel der Erfindung, ein gattungsgemäßes Wechselgetriebe so zu gestalten, daß es bei insgesamt - also inklusive Trennkupplung - minimalem Raumbedarf in der Fertigung möglichst einfach in Bearbeitung und Zusammenbau ist.

Erfindungsgemäß wird das dadurch erreicht, daß die treibenden Zahnräder lose auf der Eingangswelle gelagert sind, daß zwischen zwei treibenden Zahnrädern eine hydraulisch betätigte Lamellenkupplung angeordnet ist und daß mindestens ein treibendes Zahnrad auf je einer Seite der Lamellenkupplung fest mit deren Gehäuse verbunden ist.

Durch die zwischen den treibenden Zahnrädern angeordnete Lamellenkupplung wird der wegen der Kupplungsmuffe auf der Ausgangswelle ohnehin bereits vorhandene Abstand zwischen den Zahnrädern genutzt, sodaß die Baulänge einer vor dem Wechselgetriebe liegenden Trennkupplung nach dem Stand der Technik gänzlich eingespart ist.

Dadurch, daß die Lamellenkupplung, abweichend vom Üblichen, von innen nach außen treibt, sind im ausgekuppelten Zustand die rotierenden Massen klein, was zusammen mit der Anordnung der Kupplung auf halber Länge der Eingangswelle auch schwingungstechnische Vorteile hat und nebstbei eine kürzere Druckölbohrung in der Welle bedingt.

Die erfindungsgemäße Anordnung ist auch fertigungstechnisch günstig, weil die treibenden Zahnräder einzeln gefertigt und die Lamellenkupplung beim Zusammenstellen der Eingangswelle mit guter Genauigkeit vormontiert werden kann.

In einer vorteilhaften Ausgestaltung besteht die Lamellenkupplung aus einer fest mit der Eingangswelle verbundenen, die Innenlamellen der Kupplung tragenden und eine Gegendruckplatte bildenden Muffe, aus einer verschiebbaren Andruckplatte, die an ihrer den Lamellen abgekehrten Seite eine Kolbenplatte aufnimmt und aus einem Kupplungsgehäuse mit Schlitzen zur drehfesten Aufnahme der Außenlamellen, das die gesamte Kupplung umgreift und auf jeder Seite mit mindestens einem Zahnrad fest verbunden ist (Anspruch 2).

Das die gesamte Kupplung umgreifende und noch dazu durch die beiderseits fest damit verbundenen Zahnräder versteifte und abgestützte Gehäuse kann leichter und raumsparender ausgeführt sein als ein übliches, auf einer Seite offenes Gehäuse mit fliegendem Rand.

In einer bevorzugten Weiterbildung besteht das Kupplungsgehäuse aus zwei glockenförmigen Teilen, von denen ein Teil die sich bis zum Rand der Glocke erstreckenden Schlitze und der andere Teil Zinnen aufweist, die formschlüssig in die Schlitze eingreifen (Anspruch 3). Auf diese Weise sind die beiden Glockenhälften einfach zu fertigende Preßteile, die drehfest zusammenpassen und bei der Montage nur zusammengesteckt zu werden brauchen.

In einer bevorzugten Ausführung ist das Getriebe als Viergang-Getriebe ausgebildet (Anspruch 4), wobei sich die geringe Baulänge besonders vorteilhaft auswirkt, sodaß in der Praxis dasselbe Gehäuse wahlweise ein Zwei- Drei- oder Vierganggetriebe mit vielen gleichen Bauteilen aufnehmen kann.

In einer Weiterbildung ist in dem Vierganggetriebe je ein treibendes Zahnrad jeweils auf einer Seite der Kupplung fest mit dem Kupplungsgehäuse verbunden und weist innen eine Keilverzahnung auf, in das Naben der äußeren treibenden Zahnräder mit passenden Keilprofilen eingreifen (Anspruch 5). Daraus resultiert eine weitere Erleichterung der Montage, weil dann die vormontierte Kupplung auf die Eingangswelle aufgesteckt werden kann, bevor diese in das Gehäuse eingebaut wird.

Im folgenden wird die Erfindung anhand der Abbildungen von zwei Ausführungsbeispielen erläutert:
- Fig. 1:: Längsschnitt durch ein erfindungsgemäßes Wechselgetriebe in der bevorzugten Ausführung als Vierganggetriebe,
- Fig. 2:: Vereinfachte Darstellung einer abgewandelten Form des erfindungsgemäßen Wechselgetriebes als Zweianggetriebe.
- Fig. 3:: Kupplungsgehäuse aus Fig. 3, in explodierter Darstellung.

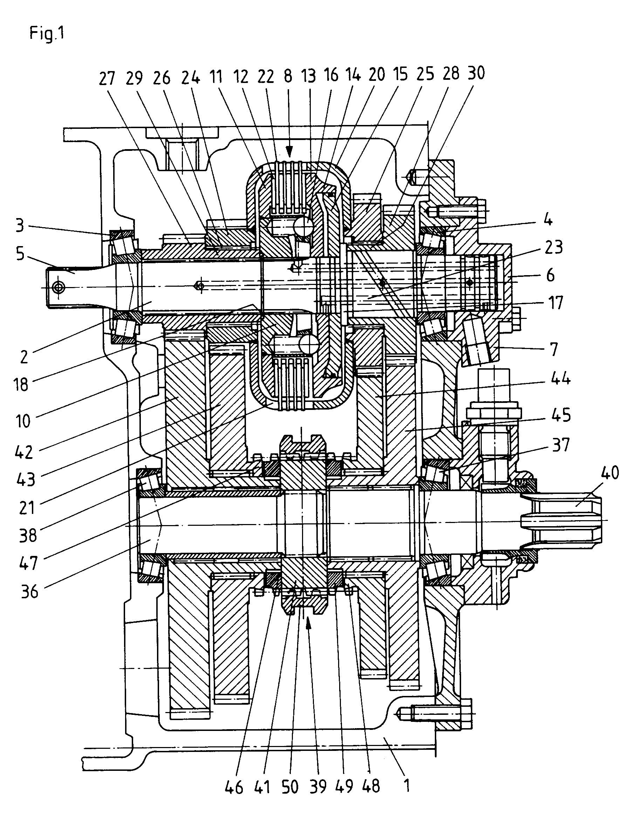

In Figur 1 ist das Getriebegehäuse, das ein eigenes Getriebegehäuse oder Teil eines Traktortriebwerkes sein kann, mit 1 bezeichnet. In diesem ist eine Eingangswelle 2 in Lagern 3,4 gelagert und ragt auf der einen Seite mit einem keilverzahnten Stummel 5, an dem direkt oder indirekt ein Antriebsmotor angreift, aus dem Gehäuse 1 heraus. Auf der anderen Seite ist das Gehäuse 1 durch einen Deckel 6 mit Druckölzuführstutzen 7 verschlossen.

Auf der Eingangswelle 2 ist ungefähr in der Mitte zwischen den Lagern 3,4 eine Lamellenkupplung 8 angeordnet. Sie besteht aus einer Kupplungsmuffe 10, die fest mit der Eingangswelle 2 verbunden ist, und einem Gehäuse 20, das nur in eingekuppeltem Zustand mitgenommen wird. Auf der Kupplungsmuffe 10 sind in bekannter Weise Innenlamellen 12 drehfest aber axial verschiebbar angebracht. Die Kupplungsmuffe 10 bildet gleichzeitig eine Gegendruckplatte 11, die auf einer Seite an die Lamellen 12 anschließt, auf deren anderer Seite eine Andrückplatte 13 axial verschiebbar angeordnet ist. Sie bildet an ihrer den Lamellen abgewandten Seite eine Zylinderwand 14, innerhalb der eine Kolbenplatte 15 dichtend angeordnet ist. Die Kolbenplatte 15 stützt sich nach einer Seite axial an dem Wellenbund 17 ab, die Kupplungsmuffe 10 ist in der anderen Richtung durch einen Sperring 18 gegen Verschieben gesichert.

Die beschriebenen Teile der Lamellenkupplung 8 werden von einem Kupplungsgehäuse 20 umfaßt, das Schlitze 21 aufweist, die Außenlamellen 22 axial verschiebbar aber drehfest aufnehmen.

Durch den Druckölzufuhrstutzen 7 und eine nicht näher dargestellte Wellendurchführung und eine Druckölbohrung 23 in der Eingangswelle 2 gelangt zum Schließen der Kupplung Drucköl in den Raum zwischen der Kolbenplatte 15 und der Andrückplatte 13. Dadurch wird diese gegen die Kraft federbelasteter Kugeln 16 gegen die Gegendruckplatte gedrückt und stellt so den Reibschluß zwischen Innenlamellen 12 und Außenlamellen 22 her, wodurch das Kupplungsgehäuse 20 in Drehung versetzt wird.

Mit dem Kupplungsgehäuse 20 sind beiderseits Zahnräder 24,25 verschweißt, die innen eine Keilverzahnung 26 aufweisen, in die mit passenden Keilverzahnungen versehene Naben 29,30 der äußeren Zahnräder 27,28 eingeschoben sind. Bei der Montage kann die vormontierte Lamellenkupplung 8 mit den angeschweißten Zahnrädern 24,25 über den Bund 17 hinweg auf die Eingangswelle 2 aufgeschoben und sodann die Zahnräder 27,28 eingesteckt werden. So kann die Eingangs-welle 2 außerhalb des Gehäuses vormontiert und dann in das Gehäuse eingesetzt werden.

Im Gehäuse 1 ist auch die Ausgangswelle 36 in Lagern 37,38 gelagert, sie ragt auf der anderen Seite aus dem Gehäuse 1 heraus und bildet dort eine Keilverzahnung 40, die entweder bereits selbst die Zapfwelle darstellt oder mit der Zapfwelle verbunden ist. Auf der Ausgangswelle 36 ist ungefähr in der Mitte eine Muffenkupplung 39 und auf beiden Seiten je zwei Zahnräder 42,43;44,45 angeordnet, die mit den Zahnrädern 24,25,27,28 der Eingangswelle ständig kämmen. Die Zahnräder 42,43,44,45 sind so ausgebildet, daß deren Mitnehmernaben 46,47,48,49 der Kupplungsnabe 41 benachbart sind. Eine Kupplungsmuffe 50 stellt in vier verschiedenen Schaltstellungen die drehfeste Verbindung zwischen einem der vier Zahnräder 42,43,44,45 und der Ausgangswelle 36 her.

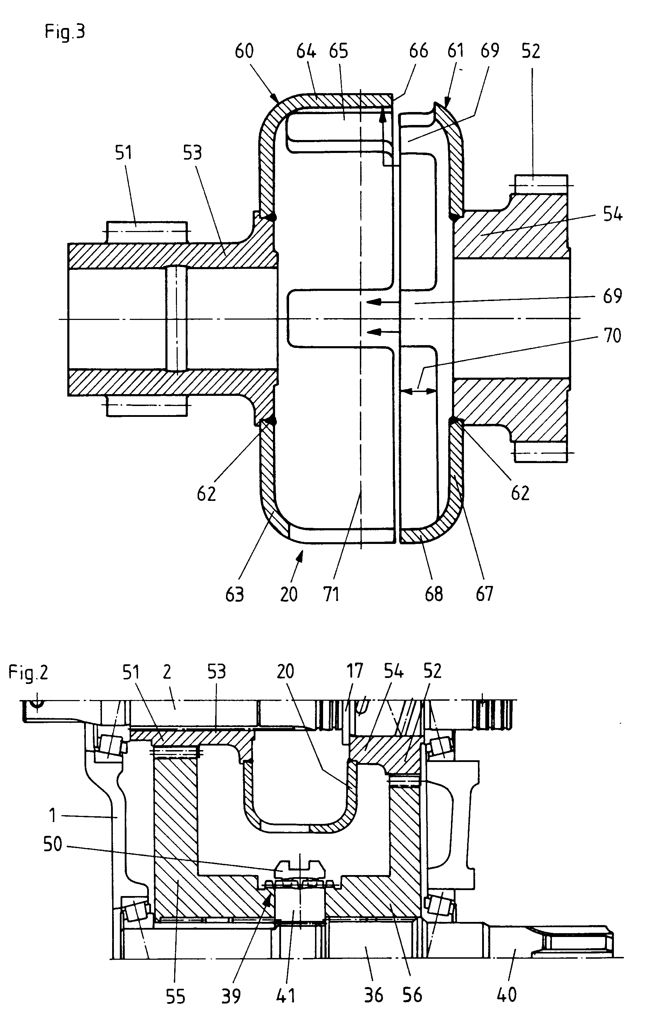

In der Variante der Figur 2 als Zweiganggetriebe sind nur die wichtigsten Teile wiedergegeben, wobei gleiche Teile, das sind Teile die auch im Vierganggetriebe der Figur 1 verwendet werden, mit gleichen Bezugszeichen versehen sind. Der Unterschied besteht nur darin, daß die treibenden Zahnräder 51,52 mit verlängerten Naben 53,54 versehen und diese mit dem Kupplungsgehäuse 20 verschweißt sind und daß dementsprechend auch nur zwei Zahnräder 55,56 beiderseits der Kupplungsnabe 41 angeordnet sind.

In Figur 3 ist im Detail zu erkennen, daß das Kupplungsgehäuse 20 aus einer ersten Glocke 60 und einer zweiten Glocke 61 besteht, wobei die eine mit dem Nabenteil 53 des Zahnrades 51 und die andere mit dem Nabenteil 54 des Zahnrades 52 fest verbunden ist. Die Glocke 60 besteht aus dem achsnormalen Boden 63, der mittels der Schweißnaht 62 mit dem Nabenteil 53 verbunden ist, und einer Umfangswand 64 mit Schlitzen 65, die sich in axialer Richtung bis zum Rand 66 der Glocke 60 erstrecken.

Die andere Glocke 61 besteht aus einem Boden 67, der mit dem Nabenteil 54 bei 62 verschweißt ist, und einer Umfangswand 68, die Zinnen 69 aufweist. Die Breite der Zinnen 69 in Umfangsrichtung entspricht der Breite der Schlitze 65 der Glocke 60, ihre Höhe 70 ist jedoch geringer als die Länge der Schlitze 65. Dadurch können die beiden Glocken 60,61 formschlüssig ineinander gesteckt werden, wobei die Zinnen 69 beim Zusammenbau der beiden Glocken 60,61 die strichliert eingezeichnete Linie 71 erreichen. Durch diese formschlüssige Verbindung kann zwischen den beiden Glocken 60,61 ein Drehmoment übertragen werden, sodaß sie bei der Montage einfach zusammengesteckt werden können.

## Patentansprüche

1. Wechselgetriebe für den Antrieb der Zapfwelle eines Ackerschleppers, bestehend aus:
a) einer Eingangswelle (2) mit mindestens zwei treibenden Zahnrädern (24,25;51,52),
b) einer Ausgangswelle (36) mit mindestens zwei losen Zahnrädern (43,44;55,56) und einer dazwischen angeordneten schaltbaren Muffenkupplung (39), wobei die losen Zahnräder mit den treibenden Zahnrädern ständig kämmen,
**dadurch gekennzeichnet,** daß
c) die treibenden Zahnräder (24,25,27,28;51,52) lose auf der Eingangswelle (2) gelagert sind,
d) zwischen zwei treibenden Zahnrädern (24,25,27,28;51,52) eine hydraulisch betätigte Lamellenkupplung (8) angeordnet ist, und
e) mindestens ein treibendes Zahnrad (24,25;51,52) auf je einer Seite der Lamellenkupplung (8) fest mit deren Gehäuse (20) verbunden ist.

2. Wechselgetriebe nach Anspruch 1, **dadurch gekennzeichnet,** daß die Lamellenkupplung (8) besteht aus:
a) einer fest mit der Eingangswelle (2) verbundenen, die Innenlamellen (12) tragenden und eine Gegendruckplatte (11) bildenden Kupplungsmuffe (10),
b) einer verschiebbaren Andrückplatte (13), die an ihrer den Lamellen (12,22) abgekehrten Seite eine Kolbenplatte (15) aufnimmt,
c) dem Kupplungsgehäuse (20) mit Schlitzen (65) zur drehfesten Aufnahme der Außenlamellen (22), das die gesamte Kupplung (8) umgreift und auf jeder Seite mit mindestens einem Zahnrad (24,25;51,52) fest verbunden ist.

3. Wechselgetriebe nach Anspruch 2, **dadurch gekennzeichnet,** daß das Kupplungsgehäuse (20) aus zwei glockenförmigen Teilen (60,61) besteht, wovon ein Teil (60) die zum Rande (66) der Glocke offenen Schlitze (65) und der andere Teil (61) in diese Schlitze (65) eingreifende Zinnen (69) aufweist.

4. Wechselgetriebe nach Anspruch 2, **dadurch gekennzeichnet,** daß beiderseits der Kupplung (8) je zwei treibende Zahnräder (24,27;25,28) und auf der Abtriebswelle (36) beiderseits je zwei getriebene Zahnräder (42,43;44,45) angeordnet sind.

5. Wechselgetriebe nach Anspruch 4, **dadurch gekennzeichnet,** daß je ein treibendes Zahnrad (24,25) jeweils auf einer Seite der Kupplung (8) fest mit dem Kupplungsgehäuse (20) verbunden ist und innen eine Keilverzahnung (26) aufweist, in das Naben (29,30) der äußeren treibenden Zahnräder (27,28) mit passenden Keilprofilen eingreifen.

## Claims

1. Change-speed gearbox for the drive of the PTO-shaft of an agricultural tractor, comprising:
a) a primary shaft (2) with at least two driving gears (24,25;51,52),
b) a secondary shaft (36) with at least two loose gears (43,44; 55,56) and a shiftable sleeve-coupling (39) arranged therebetween, the loose gears permanently meshing with the driving gears,
caracterised in that,
c) the driving gears (24,25,27,28; 51,52) are rotatably journalled on the primary shaft (2),
d) a hydraulically operated disc-coupling (8) is arranged between two driving gears (24,25,27,28; 51,52), and
e) at least one driving gear (24,25;51,52) on each side of the disc coupling (8) is firmly connected with its casing (20).

2. Change-speed gearbox according to claim 1, caracterised in that the disc-coupling (8) comprises:
a) a coupling sleeve (10) firmly coupled with the primary shaft (2), carrying the inner discs (12) and constituting a boss plate (11),
b) an axially shiftable pressure plate (13) receiving a piston plate (15) on its side averted from the discs (12,22),
c) the coupling casing (20) with slits (65) for non-rotatably receiving the outer discs (22) embracing the entire coupling (8) and being firmly connected on each side to at least one gear (24,25;51,52).

3. Change-speed gearbox according to claim 2, caracterised in that the casing (20) consists of two bell-shaped parts (60,61), one part (60) being provided with the slits (65) opening towards the edge (66) of the bell, the other part (61) being provided with projections (69) engaging the slits (65).

4. Change-speed gearbox according to claim 2, caracterised in that two driving gears (24,27;25,28) are arranged on each side of the coupling (8) and two driven gears (42,43;44,45) are arranged on each side on the secondary shaft (36).

5. Change-speed gearbox according to claim 4, caracterised in that on each side of the coupling (8), a driving gear (24,25) is firmly connected with the casing (20), the inside of each of the driving gears having splines (26) which receive hubs (29,30) with matching splines of the outer driving gears (27,28).

## Revendications

1. Boite de vitesses pour l'entrainement de la prise de force d'un tracteur agricole, comportant:
a) un arbre d'entrée (2) avec au moins deux pignons menants (24,25; 51,52),
b) un arbre de sortie (36) avec au moins deux pignons montés fous (43,44; 55,56) et un accouplement à manchon (39) debrayable disposé entre ceux-ci, les pinions montés fous étant en engrènement perpetuel avec les pignons menants,
**caractérisé** en ce que
c) les pignons menants (24,25,27,28; 51,52) sont montés fous sur l'arbre d'entrée (2),
d) un embrayage à disques (8) à actionnement hydraulique est disposé entre les pignons menants (24,25,27,28; 51,52), et
e) au moins un pignon menant (24,25; 51,52) de chaque coté de l'embrayage à disques (8) est relié à demeure à l'enveloppe (20) de l'embrayage (8).

2. Boite de vitesses selon la revendication 1, **caractérisé** en ce que l'embrayage à disques (8) comporte:
a) un manchon d'embrayage (10) relié à demeure à l'arbre d'entrée (2), portant les disques intérieurs (12) et formant disque de contrepression (11),
b) un disque de pression (13) coulissant dans lequel est logé un disque-piston (15) à son coté opposé aux disques (12,22),
c) l'enveloppe (20) pourvue de fentes (65) destinées à l'acceuil nonrotatif des disques extérieurs (22), enveloppant l'embrayage (8) entier et étant reliée à demeure à au moins un pignon (24,25; 51,52) de chaque coté.

3. Boite de vitesses selon la revendication 2, **caractérisé** en ce que l'enveloppe (20) de l'embrayage est composée de deux cloches (60,61) dont l'une (60) comporte les fentes (65) ouvertes vers le bord (66) de la cloche et dont l'autre comporte des projections (69) engageant les fentes (65).

4. Boite de vitesses selon la revendication 2, **caractérisé** en ce que deux pinions menants (24,27; 25,28) sont disposés de chaque coté de l'embrayage (8) et chaque fois deux pignons menés sont disposés des deux cotés sur l'arbre de sortie (36).

5. Boite de vitesses selon la revendication 4, **caractérisé** en ce qu'un pinion menant (24,25) de chaque coté de l'embrayage (8) est relié à demeure à l'enveloppe (20) et est pourvu à l'intérieur de cannelures (26) en prise avec des moyeux (29,30) des pinions menants extérieurs (27,28) comportant des cannelures à la mésure.
